Europäisches Patentamt

European Patent Office

Office européen des brevets

(19)

(11) **EP 0 459 813 B1**

(12) **EUROPEAN PATENT SPECIFICATION**

(45) Date of publication and mention
of the grant of the patent:
**19.11.1997 Bulletin 1997/47**

(51) Int Cl.⁶: **G01S 7/52**, A61B 8/00

(21) Application number: **91304922.7**

(22) Date of filing: **31.05.1991**

(54) **Ultrasonic imaging apparatus indicating dispersion of characteristic parameter of medium**

Ultraschallabbildungsgerät zur Bestimmung der Verteilung einer karakteristischen Eigenschaft eines Mediums

Appareil d'imagerie ultrasonore donnant la dispersion d'un paramètre caractéristique d'un milieu

(84) Designated Contracting States:
**DE FR GB**

(30) Priority: **31.05.1990 JP 142355/90**

(43) Date of publication of application:
**04.12.1991 Bulletin 1991/49**

(73) Proprietor: **FUJITSU LIMITED
Kawasaki-shi, Kanagawa 211 (JP)**

(72) Inventors:
• **Yamada, Isamu**
  **Takatsu-ku, Kawasaki-shi, Kanagawa 213 (JP)**
• **Shiba, Akira**
  **Kawasaki-shi, Kanagawa 213 (JP)**
• **Amemiya, Shinichi**
  **Yokohama-shi, Kanagawa 223 (JP)**
• **Murakami, Keiichi**
  **Kawasaki-shi, Kanagawa 214 (JP)**
• **Shimura, Takaki**
  **Machida-shi, Tokyo 194-01 (JP)**

(74) Representative:
**Fane, Christopher Robin King et al
Haseltine Lake & Co.,
Imperial House,
15-19 Kingsway
London WC2B 6UD (GB)**

(56) References cited:
**EP-A- 0 150 997        EP-A- 0 154 869
US-A- 4 817 015**

**Description**

The present invention relates to an ultrasonic imaging apparatus which functions to display an image (representation) of a two-dimensional distribution of a tissue characterization parameter of a tissue, for example an ultrasonic attenuation coefficient, in a realtime mode.

In the field of the ultrasonic diagnosis, such two-dimensional distributions of tissue characterization parameters, for example an ultrasonic attenuation coefficient, an ultrasonic reflection coefficient, and an elasticity parameter, are used to diagnose a condition of the tissue. For example, the value of the ultrasonic attenuation coefficient of tissue of a liver suffering from hepatitis is small compared with a normal tissue, and the value of the ultrasonic attenuation coefficient of a fatty liver is large compared with a normal tissue. Since high accuracy is required in ultrasonic diagnosis, the tissue characterization parameters must be determined precisely.

One type of conventional ultrasonic imaging apparatus which functions to display an image of a two-dimensional distribution of a tissue characterization parameter of a tissue in a realtime mode is disclosed in the Japanese Unexamined Patent Publication No.62-109553, U.S.Patent No.4,836,210 of Shiba et al, dated June 6, 1989, and in EP-A-0154869.

In such ultrasonic imaging apparatuses, a pulsed ultrasound beam is generated and injected into a tissue in a certain direction, and ultrasound which is reflected at various depths of the tissue in the same direction is detected. The direction of the pulsed ultrasound is varied (scanned) so that a plane is scanned by the pulsed ultrasound during one plane scan cycle. Thus, a two-dimensional distribution of the tissue characterization parameter in the plane (cross section of the tissue) is obtained. The above injection and detection of the ultrasound is carried out by means of an ultrasonic transducer array. The operator (doctor) applies a probe containing the transducer array to the skin of a human body to diagnose the condition of the tissue under the skin.

However, the obtained values of the above tissue characterization parameters fluctuate due to subtle movements of the probe or the tissue which is subject to the diagnosis. Further, for example, the values of the ultrasonic attenuation coefficient, which are obtained as above, vary greatly when a structure which is different from the tissue which is to be diagnosed, e.g. a vascular tract, exists in the scanned cross-section. Generally, it is considered that the obtained values of the tissue characterization parameters are significant only when the obtained values are stable. Thus, generally, the values of the tissue characterization parameters must be obtained on a cross section of the tissue where the obtained values are stable. Nevertheless, conventionally, it is difficult for the operator to determine whether or not an obtained value of a tissue characterization parameter is stable. Therefore, in conventional ultrasonic imaging apparatuses, the credibility of the obtained values of the tissue characterization parameters is low.

To address this problem, US 4817015 discloses ultrasonic imaging apparatus which may be considered to comprise: ultrasonic pulse generating means for emitting a predetermined sequence of ultrasonic pulses into a medium to be examined, the pulses of the sequence being emitted along respective differently-directed emission paths in a predetermined plane so that over the course of the said sequence a working area of the predetermined plane is scanned within the said medium; ultrasonic detection means arranged for detecting reflections of each such emitted pulse back along the emission path thereof; two-dimensional distribution obtaining means, connected for measuring the time interval between the emission of each such pulse and the detection by the ultrasonic detection means of each such reflection of that pulse, so as to determine the distances from the detection means of points in the said working area at which such reflections occur, and operable to employ the determined distances to produce a two-dimensional representation of the distribution, throughout the said working area, of the respective values of a predetermined characteristic parameter of the medium at the said points; region of interest designating means, selectively controllable to define a restricted region of interest in the said working area; and statistical information obtaining means operable to obtain, based on the parameter values of all such points in the said region of interest, statistical information relating to the dispersion of those values in that region; the apparatus being operable repetitively to scan the working area a plural number of times in succession so as to produce a succession of such representations and to obtain for each representation corresponding such statistical information relating to the dispersion in the region of interest.

The statistical information obtaining means in this apparatus are employed as a texture discriminator for detecting a semi-periodic array of specular scatterers at some spacing d resolvable by the ultrasonic imaging apparatus but not detectable in the image by a human observer due to image texture noise. As statistical information, a square b of the mean of the intensities of parameter values at points in the region of interest, a variance t of those intensitites, a measure d of average spacing of periodic and semi-periodic arrays of specular scatterers, and a variation p of backscattered intensities are obtained so as to classify the region of interest. The statistical information is obtained "online", the displayed image being updated continuously every video frame, and values of the statistical information, which are simply displayed by the side of the image in numerical form, are updated at a rate of approximately once every three video frames.

Ultrasonic imaging apparatus embodying the present invention is characterised by two-dimensional distribution storing means for storing a plurality of the successively-produced representations, and by statistical information storing means for storing the said corresponding statistical information for each representation of the said plurality.

Such ultrasonic imaging apparatus can enable an operator to easily determine stability of the tissue characterization parameter values which are obtained from the apparatus. With such ultrasonic imaging apparatus an operator can easily identify the representation, from amongst a plurality of representations for which values of the tissue characterization parameter have been most recently obtained, which has the most stable tissue characterization parameter values.

Reference will now be made, by way of example, to the accompanying drawings, in which:

Figure 1 is a block diagram showing an ultrasonic imaging apparatus embodying the present invention;

Figure 2 is a block diagram showing an example construction of a parameter calculation circuit 100 in the Fig. 1 apparatus;

Figure 3 is a block diagram showing a construction of further circuitry of the Fig. 1 apparatus;

Figure 4 is a block diagram showing an example construction of a frequency distribution obtaining circuit 33 in the Fig. 3 circuitry;

Figure 5 is a histogram, showing a frequency distribution of values of a tissue characterization parameter in a region of interest, produced by the Fig. 4 circuit;

Figure 6 is a diagram showing an example display, produced by the Figure 1 apparatus, of a two-dimensional representation of the distribution of detected values of a tissue characterization parameter and a representation of a designated region of interest;

Figure 7 is a diagram showing an example display, produced by the Figure 1 apparatus, of a recent history of the average of detected values of a tissue characterization parameter in a region of interest;

Figure 8 is a diagram showing an example display, produced by the Figure 1 apparatus, of a recent history of the standard deviation of detected values of a tissue characterization parameter in a region of interest;

Figure 9 is a diagram showing an example display, produced by the Figure 1 apparatus, of a recent history of the skewness of a frequency distribution of detected values of the tissue characterization parameter in a region of interest;

Figure 10 is a diagram showing an example display, produced by the Figure 1 apparatus, of a recent history of the kurtosis of a frequency distribution of detected values of the tissue characterization parameter in a region of interest;

Figure 11 is a diagram showing an example display, produced by the Figure 1 apparatus, of a recent history of the frequency distribution of detected values of a tissue characterization parameter in a region of interest;

Figure 12 is a diagram showing an example display produced by the Figure 1 apparatus during an operation of designating a representation (frame) performed by an operator using a cursor;

Figure 13 is a diagram showing an example display produced by the Figure 1 apparatus when performing an operation of identifying a representation (frame) having the minimum standard deviation among a plurality of representations which have been most recently produced by the apparatus; and

Figure 14 is a diagram of an example display, produced by the Figure 1 apparatus, showing a frequency distribution of values of a tissue characterization parameter in a current representation (frame), and also showing superimposed thereon a frequency distribution of values of the tissue characterization parameter in the representation having the minimum standard deviation.

DESCRIPTION OF THE PREFERRED EMBODIMENTS

Fig. 1

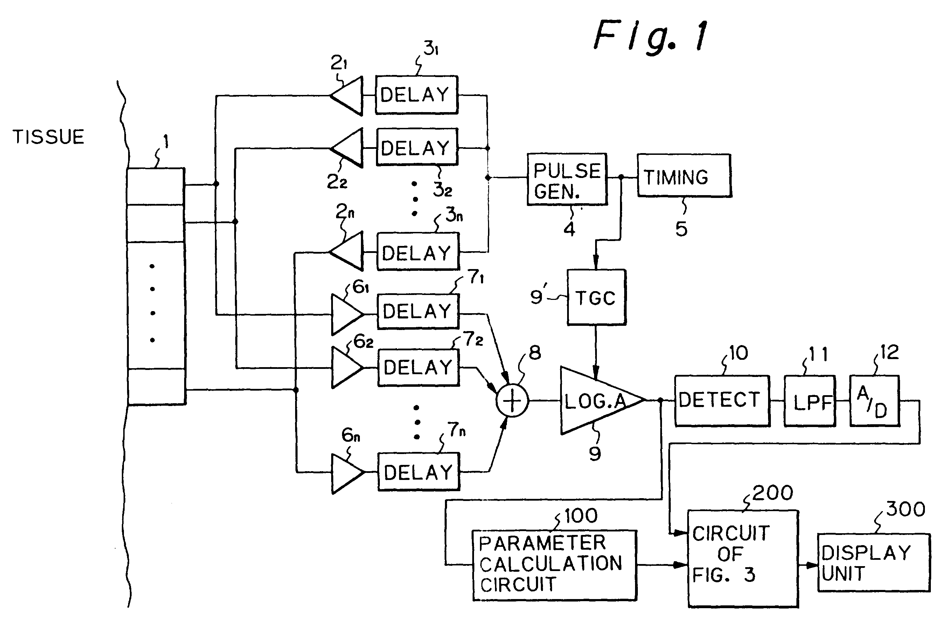

Figure 1 is a block diaaram showina one constructionof ultrasonic imaging apparatus embodying the present invention. In Fig. 1, reference numeral 1 denotes an ultrasonic transducer array, $2_1$, $2_2$, $2_3$, $\cdots$ $2_n$ and $6_1$, $6_2$, $6_3$, $\cdots$ 6n each denote an amplifier, $3_1$, $3_2$, $3_3$, $\cdots$ $3_n$ and $7_1$, $7_2$, $7_3$, ... $7_n$ each denote a delay circuit, 4 denotes a pulse generator, 5 denotes a timing generator, 8 denotes a summing amplifier, 9 denotes a LOG amplifier, 9' denotes a time gain control circuit, 10 denotes a detector, 11 denotes a low pass filter, 12 denotes an analog to digital converter, 100 denotes a parameter calculation circuit, 200 denotes a characteristic portion of the embodiment of the present invention, and 300 denotes a display unit.

The timing generator 5 generates a timing signal at a constant rate, and the pulse generator 4 generates a pulse signal to generate an ultrasound pulse. Each delay circuit $3_i$ and $7_i$ (i=1, 2, $\cdots$ n) is connected in series to a corresponding one of the amplifiers $2_i$ and $6_i$ (i=1, 2, $\cdots$ n). The pulse signal is input in parallel to the respective series connections of the delay circuits $3_i$ (i=1, 2, $\cdots$ n) and the amplifiers $2_i$ (i=1, 2, $\cdots$ n). The ultrasonic transducer array 1 comprises a plurality of transducer elements. Each transducer element comprises a piezo-electric element which converts an electric signal to a mechanical deformation to generate an ultrasound, and generates an electric signal when the element receives an ultrasound. The transducer array 1 is manually applied to a skin over a region of tissue of the human body in which a doctor is interested, to diagnose the region. The respective outputs of the amplifiers $2_i$ are respectively applied to the plurality of transducer elements of the ultrasonic transducer array 1. Delay times in the above delay circuits $3_i$ (i=1, 2, ⋯ n) are controlled so that the ultrasound signals generated respectively by the above transducer elements are synthesized to form an ultrasound beam (emitted pulse) directed in a certain direction for each cycle of the output of the ultrasound, and the direction is moved to scan a working area of a cross-section (predetermined plane) of the tissue over the course of each scanning cycle.

The electric signals which are output from the plurality of transducer elements are respectively input in parallel into the series connections of the delay circuits $7_i$ (i=1, 2, ⋯ n) and the amplifiers $6_i$ (i=1, 2, ⋯ n). The outputs of the series connections of the delay circuits $7_i$ (i=1, 2, ⋯ n) and the amplifiers $6_i$ (i=1, 2, ⋯ n) are summed in the summing amplifier 8 and the resulting summed signal is applied to the LOG amplifier 9. Delay times in the above delay circuits $7_i$ (i=1, 2, ⋯ n) are controlled so that the summed signal corresponds to ultrasound which is received by the transducer array 1 in the same direction in which the ultrasound beam is being generated by the transducer array 1, and the direction is moved to scan a cross section of the tissue for each scanning cycle, synchronized with the above scanning operation by the delay circuits $3_i$ (i=1, 2, ⋯ n). The LOG amplifier 9 amplifies the summed signal. The gain of the LOG amplifier 9 is controlled by the time gain control circuit 9' so that the gain of the LOG amplifier 9 is increased, in accordance with a logarithmic law, with time that has elapsed since the instant at which the emitted pulse of ultrasound was generated by the transducer array 1. The output of the LOG amplifier 9 is applied in parallel to the detector 10 and the parameter calculation circuit 100.

The envelope of the above output of the LOG amplifier 9 is detected in the detector 10, and the detected signal is input into the low pass filter 11. The output of the low pass filter 11 corresponds to ultrasonographic image data. The output of the low pass filter 11 is converted to a digital form by the analog to digital converter 12. The digital data is supplied to the characteristic portion 200.

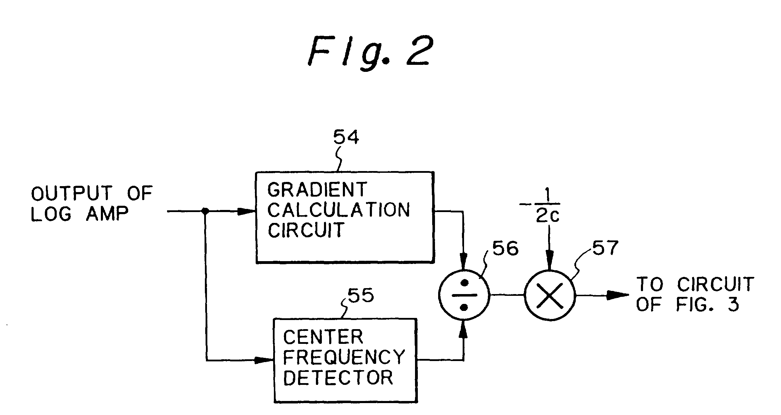

Parameter Calculation Circuit (Fig. 2)

Figure 2 is a block diagram showing a construction of an example of the parameter calculation circuit 100 in Fig. 1. In Fig. 2, reference numeral 54 denotes a gradient calculation circuit, 55 denotes a center frequency detector, 56 denotes a divider, and 57 denotes a multiplier.

The gradient calculation circuit 54 obtains a gradient of an envelope of the above output of the LOG amplifier 9 in a digital form, and the center frequency detector 55 detects a center frequency of the output of the LOG amplifier 9 in a digital form. The divider 56 divides the output of the gradient calculation circuit 54 by the output of the center frequency detector 55, and the multiplier 57 multiplies the output of the divider 56 by a constant -1/2c to obtain the ultrasonic attenuation coefficient. The obtained ultrasonic attenuation coefficient is supplied to the above characteristic portion 200. A detailed description of a suitable construction for obtaining the ultrasonic attenuation coefficient is disclosed in the Japanese Unexamined Patent Publication No. 62-109553. The parameter calculation circuit 100 may alternatively have a different construction, suitable for obtaining an ultrasonic reflection coefficient, or another elasticity parameter. These constructions for obtaining the ultrasonic reflection coefficient and the other elasticity parameters are conventionally known.

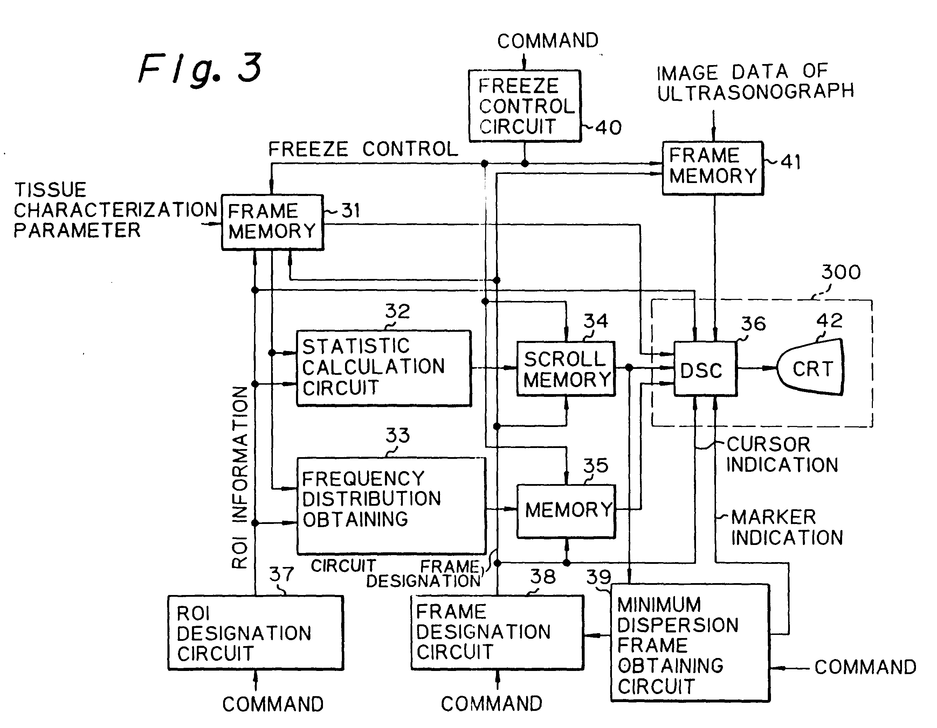

Characteristic Portion (Fig. 3)

Figure 3 is a block diagram showing a construction of the characteristic portion of the embodiment of the present invention. In Fig. 3, reference numeral 31 denotes a frame memory for storing a two-dimensional representation of the distribution of a tissue characterization parameter, 32 denotes a statistic calculation circuit, 33 denotes a frequency distribution obtaining circuit, 34 denotes a scroll memory, 35 denotes a memory, 36 denotes a digital scan converter, 37 denotes a region of interest designation circuit, 38 denotes a frame designation circuit, 39 denotes a minimum dispersion frame obtaining circuit, 40 denotes a freeze control circuit, 41 denotes a frame memory for ultrasonographic image data, and 42 denotes a CRT.

The above-mentioned digital ultrasonographic image data is stored in the frame memory 41, and the above-mentioned digital tissue characterization parameter distribution data is stored in the frame memory 31. These frame memories each hold the data of a plurality of frames which have been most recently scanned (observed). The statistic calculation circuit 32 obtains statistical information (a statistical measure) relating to the dispersion (dispersing characteristic) of the respective characteristic parameter values of the tissue at the various points in a restricted region of interest of the working area of of each cross section (two-dimensional representation). The region of interest is designated by the region of interest designation circuit 37 as explained later.

Statistic Information

The statistical measure of dispersion is, for example, a standard deviation of the values of the tissue characterization parameter which were obtained in the parameter calculation circuit 100 within the region of interest in each cross section, a skewness of a frequency distribution of the values of the tissue characterization parameter which were obtained in the parameter calculation circuit 100 within the region of interest in each cross section, or the kurtosis of a frequency distribution of the values of the tissue characterization parameter which were obtained in the parameter calculation circuit 100 within the region of interest in each cross section. The values of the tissue characterization parameter in the region of interest are denoted by $X_i$ (i=1,2, $\cdots$ N), where N denotes the total number of obtained values in the region of interest.

The statistical measure of dispersion is calculated by the statistic calculation circuit 32 as follows:

An average m of the values of the tissue characterization parameter which were obtained in the parameter calculation circuit 100 within the region of interest in each cross section, is obtained by the following equation (1).

$$m=(1/N)\cdot\sum_{i=1}^{N} x_i \qquad (1)$$

The variance $\sigma^2$ is obtained by the following equation (2).

$$\sigma^2=(1/N)\cdot\sum_{i=1}^{N} x_i^2 - m^2 \qquad (2)$$

The standard deviation a is obtained by the following equation (3).

$$\sigma = \sqrt{\sigma^2} \qquad (3)$$

The third order center moment $\mu_3$ is obtained as the following equation (4).

$$\mu_3=(1/N)\cdot\sum_{i=1}^{N} x_i^3 - (3m/N)\cdot\sum_{i=1}^{N} x_i^2 + 2m^3 \qquad (4)$$

The fourth order center moment $\mu_4$ is obtained by the following equation (5).

$$\mu_4=(1/N)\cdot\sum_{i=1}^{N} x_i^4 - (4m/N)\cdot\sum_{i=1}^{N} x_i^3$$

$$+ (6m^2/N)\cdot\sum_{i=1}^{N} x_i^2 - 3m^4 \qquad (5)$$

The skewness S of the frequency distribution of the values of the tissue characterization parameter in the region of interest indicates asymmetry of the frequency distribution, and is obtained by the following equation (6).

$$S=\mu_3/\sigma^3 \qquad (6)$$

The kurtosis K of the frequency distribution of the values of the tissue characterization parameter in the region of interest indicates flatness of the frequency distribution, and is obtained by the following equation (7).

$$K = \mu_4/\sigma^4 - 3 \qquad\qquad (7)$$

The results of the statistic calculations as above are input into the scroll memory 34 for each frame or two-dimensional representation (cross section). The scroll memory 34 stores the statistic information for a predetermined number of frames which are most recently observed.

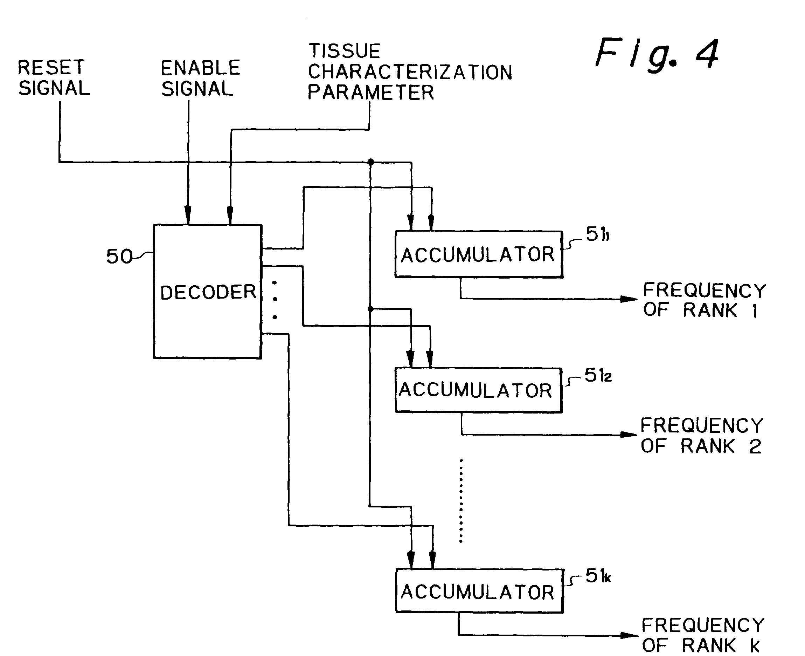

Frequency Distribution Obtaining Circuit (Fig. 4)

The frequency distribution obtaining circuit 33 obtains a frequency distribution of the values of the tissue characterization parameter in the region of interest in each two-dimensional representation (cross section). Figure 4 is a block diagram showing a construction of the frequency distribution obtaining circuit 33 in Fig. 3. In Fig. 4, reference numeral 50 denotes a decoder, and $51_1$, $51_2$, $51_3$, $\cdots 51_n$ each denote an accumulator.

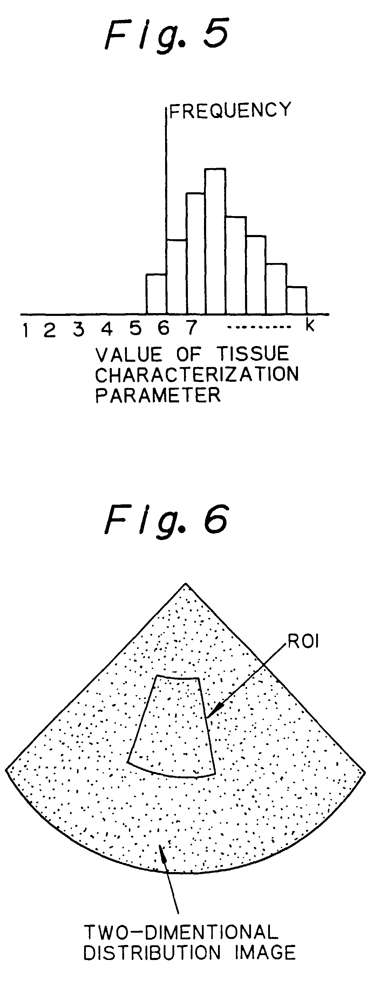

The values of the tissue characterization parameter are sorted into a plurality of ranks (ranges of the values) to obtain a histogram of the frequency distribution, an example of which is shown in Figure 5. The accumulators $51_1$, $51_2$, $51_3$, $\cdots 51_n$ are provided for the respective ranks. The decoder 50 receives respective values of the tissue characterization parameter which are stored in the frame memory 31. The decoder 50 has a plurality of outputs corresponding to the plurality of ranks to realize the function of the sorting. One of the outputs of the decoder 50, corresponding to one of the ranks into which the received value is to be sorted, becomes active when the enable signal is active. The enable signal is generated by the region of interest designation circuit 37, and is made active when values of the tissue characterization parameter in the region of interest are output from the frame memory 31. A reset signal is applied to the plurality of accumulators $51_1$, $51_2$, $51_3$, $\cdots 51_n$ when the accumulators should be reset. The accumulation is carried out for example, for each scanning cycle (each cross section), or for a predetermined number of successive scanning cycles. Figure 5 is an example histogram showing a frequency distribution of values of the tissue characterization parameter in the region of interest. The above obtained frequency distribution is input into the memory 35 for each frame (cross section). The memory 35 stores the data of the frequency distributions for a predetermined number of frames which are most recently observed.

Fig. 6

Figure 6 is a diagram showing an example of the display of the two-dimensional distribution of detected values of a tissue characterization parameter and an indication of the designated region of interest. Viewing the display, the operator can designate a desired region of interest, for example, by a pointing device. The region of interest designation circuit 37 controls the operation reading the values of the tissue characterization parameter from the frame memory 31 and the operation writing the values into the statistic calculation circuit 32 and the frequency distribution obtaining circuit 33 by supplying corresponding addresses and reading and writing signals. The technique of designating a region of interest is well-known.

Indication of History of Statistics (Figs. 3, 7, 8, 9, and 10)

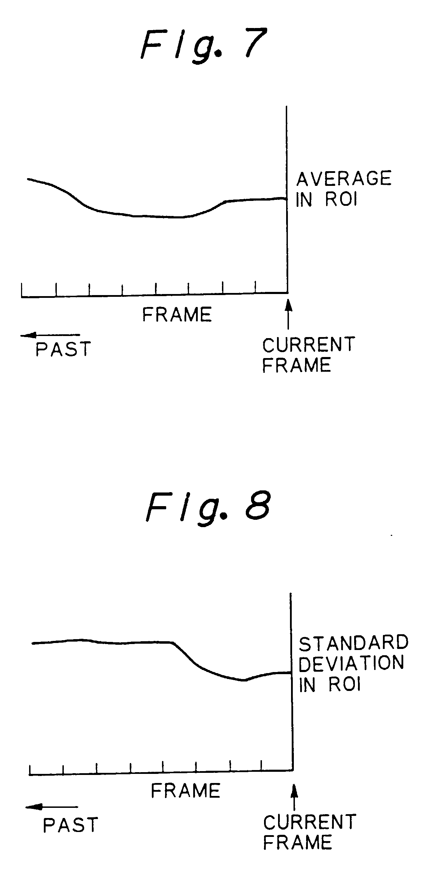

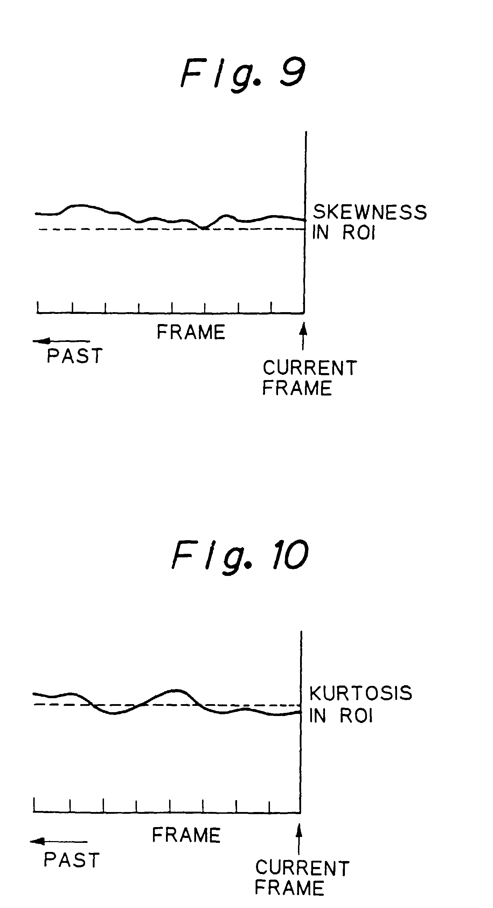

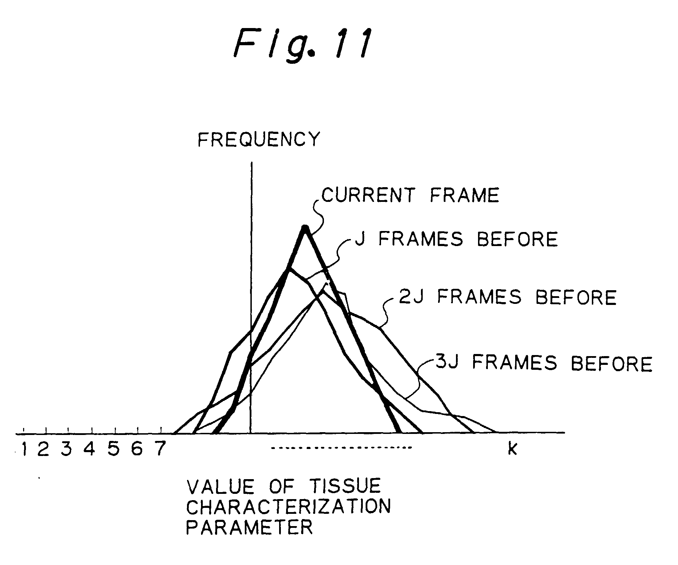

In a display mode, a recent history of one or more of the aforementioned types of statistic measure of dispersion over a predetermined number of successive frames (ending with the current frame) is indicated in a real time mode as shown in Figs. 8 to 11. In addition to the measure(s) of dispersion the apparatus may also display, as shown in Fig. 7, a recent history of an average of the parameter values in the region of interest over a predetermined number of successive frames. The history data to be displayed is supplied from the scroll memory 34 and the memory 35. In the display mode, each item of statistic information in the history may be calculated for a predetermined number of successive frames instead of one frame. Figure 7 is a diagram showing an example indication of a recent history of an average of the detected values of a tissue characterization parameter in a region of interest, Figure 8 is a diagram showing an example indication of a recent history of a standard deviation of a frequency distribution of detected values of a tissue characterization parameter in a region of interest, Figure 9 is a diagram showing an example indication of a recent history of the skewness of a frequency distribution of detected values of the tissue characterization parameter in a region of interest, Figure 10 is a diagram showing an example indication of a recent history of the kurtosis of a frequency distribution of detected values of the tissue characterization parameter in a region of interest, and Figure 11 is a diagram showing an example indication of a recent history of the frequency distribution of detected values of a tissue characterization parameter in a region of interest. In Fig. 11, the lines for the frequency distributions of the different frames may be represented by different respective types of lines for example by using different colors. The operator can view the display while manipulating the probe. Therefore, for example, the operator can recognize whether or not a most recently variation in a position of the probe gives a better (more stable and credible) result, and can avoid making use of unstable data based on the above history indications.

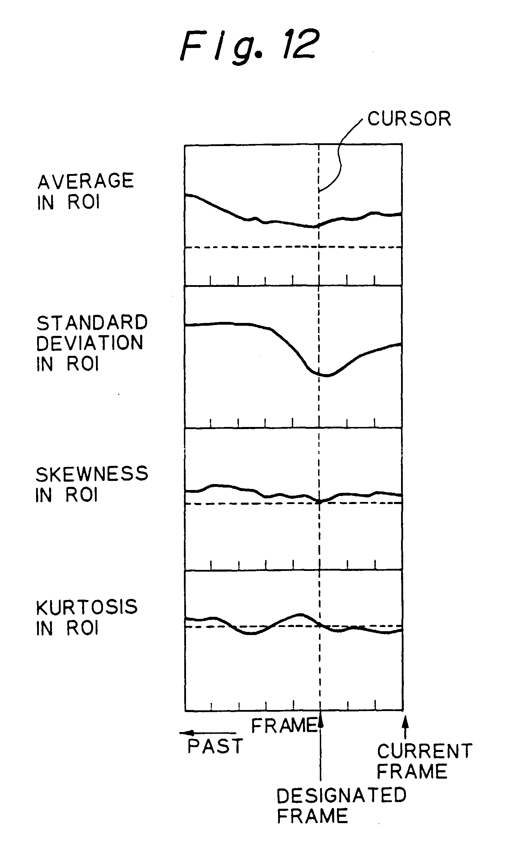

Freeze Control and Frame Designation (Figs. 3 and 12)

When the operator finds in the above history indication that credible data has been obtained, the operator can freeze the operation of updating (renewing) the contents of the scroll memory 34 and the memory 35, and thus, can freeze the history indication. The freezing operation can be carried out through the freeze control circuit 40. When the freeze control circuit 40 receives a command to effect the freeze operation, the freeze control circuit 40 supplies a freeze control signal to the frame memories 31 and 41, the scroll memory 34, and the memory 35 to freeze these elements, as shown in Fig. 3.

Fiaure 12 is a diaqram showing an example display in an operation of designating a frame, performed by an operator using a cursor. As shown in Fig. 12, the operator can designate one of the frames for which the history of the statistic information is indicated, based on the indication, by moving a cursor to the frame in the history indication using a pointing device (not shown). This operation is realized out by means of the frame designation circuit 38. Responding to the designation by the operator, the frame designation circuit 38 can control the frame memories 31 and 41, the scroll memory 34, and the memory 35, so that these memories output contents thereof regarding the designated frame, to the digital scan converter 36. Further, the frame designation circuit 38 can send the information on the designated frame to the digital scan converter 36 so that the above cursor indication is realized.

Further, the aforementioned region of interest designation circuit 37 can be operated again to reobtain statistic information on the dispersing characteristic of the predetermined characteristic parameter in a region of interest which is different from the reqion of interest which was first designated. By redesignating the new region of interest, by means of the region of interest designation circuit 37,after freezing the above memories in Fig. 3, the above statistical information can be obtained by using the frozen data of the tissue characterization parameter, and operating the statistic calculation circuit 32 and/or the frequency distribution obtaining circuit 33.

Calculation of Most Stable Frame (Figs. 3, 13, and 14)

The most stable frame among a plurality of frames which have been most recently observed, can be automatically obtained by using the recent history data of the statistic information.

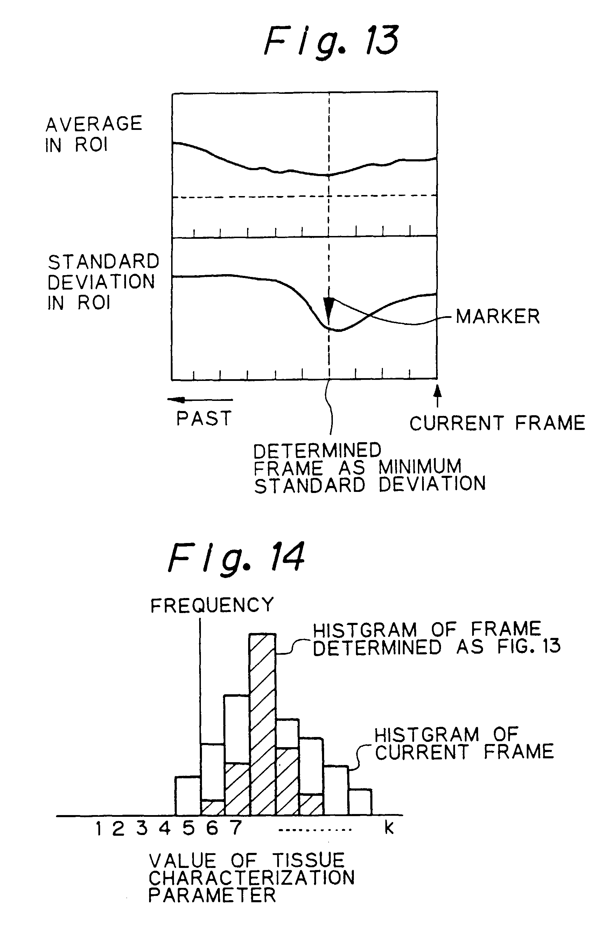

The minimum dispersion frame obtaining circuit 39 determines the frame having the minimum standard deviation. Although not shown, the minimum dispersion frame obtaining circuit 39 may comprise registers for holding the frame number of the frame found so far to have the minimum standard deviation, and for holding the minimum standard deviation found so far, and a comparator for comparing a standard deviation of a current frame with the held standard deviation. the minimum dispersion frame obtaining circuit 39 replaces the held frame number and the standard deviation with the current frame number and the standard deviation of the current frame when the current standard deviation is not larger than the held standard deviation. When a command to indicate the frame of the minimum standard deviation which is determined by the minimum dispersion frame obtaining circuit 39 is input, the minimum dispersion frame obtaining circuit 39 sends a marker indication data to the digital scan converter 36. The marker indication data indicates how many frames before the current frame the frame having the minimum standard deviation is. When the aforementioned control circuit of the digital scan converter 36 receives the marker indication data, a marker indication is shown superimposed on the above history indication of the statistic information. Figure 13 is a diagram showing an example indication of a frame found to have the minimum standard deviation among a plurality of frames which has been most recently observed.

Further, a histogram indicating a frequency distribution of the values of the tissue characterization parameter in a current frame can be displayed superimposed on another histogram indicating a frequency distribution of the values of the tissue characterization parameter in the above-mentioned frame having the minimum standard deviation, as shown in Fig. 14. This form of display is realized by controlling the memory 35 by means of the frame designation circuit 38 by another output of the minimum dispersion frame obtaining circuit 39. The output of the minimum dispersion frame obtaining circuit 39 includes information of the frame having the minimum standard deviation. When the frame designation circuit 38 receives the above output, the frame designation circuit 38 can control the frame memories 31 and 41, the scroll memory 34, and the memory 35, so that these memories output contents thereof regarding the frame of the minimum standard deviation, to the digital scan converter 36.

Otherwise, using the function of the minimum dispersion frame obtaining circuit 39, it is possible to set the ultrasonic imaging apparatus of Fig. 1 so that the apparatus automatically indicates the image of the ultrasonograph and the two-dimensional distribution image (representation) of the tissue characterization parameter of the frame of the minimum standard deviation by controlling the frame memories 31 and 41 through the frame designation circuit 38.

Although not shown, all the above operations in the embodiment can be realized by either a hardware logic circuit or by software in a microcomputer.

## Claims

1. Ultrasonic imaging apparatus including:

    ultrasonic pulse generating means (1-5) for emitting a predetermined sequence of ultrasonic pulses into a medium to be examined, the pulses of the sequence being emitted along respective differently-directed emission paths in a predetermined plane so that over the course of the said sequence a working area of the predetermined plane is scanned within the said medium;
    ultrasonic detection means (1, 3, 6-9) arranged for detecting reflections of each such emitted pulse back along the emission path thereof;
    two-dimensional distribution obtaining means (100, 41), connected for measuring the time interval between the emission of each such pulse and the detection by the ultrasonic detection means of each such reflection of that pulse, so as to determine the distances from the detection means of points in the said working area at which such reflections occur, and operable to employ the determined distances to produce a two-dimensional representation of the distribution, throughout the said working area, of the respective values of a predetermined characteristic parameter of the medium at the said points;
    region of interest designating means (37), selectively controllable to define a restricted region of interest in the said working area; and
    statistical information obtaining means (32,33) operable to obtain, based on the parameter values of all such points in the said region of interest, statistical information relating to the dispersion of those values in that region;
    the apparatus being operable repetitively to scan the working area a plural number of times in succession so as to produce a succession of such representations and to obtain, for each representation, corresponding such statistical information relating to the parameter-value dispersion in the region of interest;

    characterised by two-dimensional distribution storing means (31) for storing a plurality of the successively-produced representations, and by statistical information storing means (34,35) for storing the said corresponding statistical information for each representation of the said plurality.

2. Ultrasonic imaging apparatus as claimed in claim 1, further comprising stored distribution indicating means (36, 38) for displaying one of the said two-dimensional representations stored in the said two-dimensional distribution storing means (31).

3. Ultrasonic imaging apparatus as claimed in claim 1 or 2, wherein the said two-dimensional representations stored by the two-dimensional distribution storing means (31) are the representations produced most recently by the two-dimensional distribution obtaining means (100, 41).

4. Ultrasonic imaging apparatus as claimed in claim 1, 2 or 3, further comprising stored statistical information indicating means (36, 42) for displaying the statistical information stored in the said statistical information storing means (34, 35).

5. Ultrasonic imaging apparatus as claimed in any preceding claim, further comprising storage freezing means (40) for freezing an operation of updating the said statistical information storing means (34, 35) and the said two-dimensional distribution storing means (31).

6. Ultrasonic imaging apparatus as claimed in claim 5, further comprising frozen plane designating means (38) operable, after the said statistical information storing means (34, 35) and the said two-dimensional distribution storing means (31) have been frozen, to designate one of the representations stored in the said two-dimensional distribution storing means (31).

7. Ultrasonic imaging apparatus as claimed in claim 6, further comprising designated information indicating means (34, 35, 36) for displaying the two-dimensional representation designated by the said frozen plane designating means (38) and for displaying the said statistical information corresponding to that designated representation.

8. Ultrasonic imaging apparatus as claimed in any preceding claim, further comprising:

plane designating means (38) for designating one of the representations stored in the said two-dimensional distribution storing means (31); and

history information indicating means (34, 35, 36) for displaying a recent history of the said statistical information, starting with the statistical information for the most-recently-produced representation and ending with the statistical information for the representation designated by the said plane designating means (38).

9. Ultrasonic imaging apparatus according to any preceding claim, further comprising:

region of interest redesignating means (37), selectively controllable to define a further region of interest, in the said working area, different from the selected region of interest defined by the said region of interest designating means; and

statistical information reobtaining means (32) for obtaining statistical information relating to the dispersion of the parameter values in the said further region of interest.

10. Ultrasonic imaging apparatus according to any preceding claim, wherein the said statistical information includes a statistical measure of the standard deviation of the parameter values of the points in the region of interest.

11. Ultrasonic imaging apparatus according to any preceding claim, wherein the said statistical information includes a statistical measure of the skewness of a frequency distribution of the said parameter values of the points in the region of interest.

12. Ultrasonic imaging apparatus as claimed in any preceding claim, wherein the said statistical information includes a statistical measure of the kurtosis of a frequency distribution of the parameter values of the points in the region of interest.

13. Ultrasonic imaging apparatus according to any one of claims 10 to 12, wherein the statistical measures corresponding respectively to the different representations of the said plurality are displayed simultaneously.

14. Ultrasonic imaging apparatus according to any preceding claim, wherein the statistical information obtaining means (32, 33) further include frequency distribution obtaining means (33) operable to process the parameter values of the points in the said selected region of interest to obtain a frequency distribution of those values in the region of interest of the representation concerned.

15. Ultrasonic imaging apparatus according to claim 14, wherein the said frequency distributions corresponding respectively to two or more representations are displayed simultaneously.

16. Ultrasonic imaging apparatus as claimed in any preceding claim, wherein the said statistical information obtaining means (32, 33) are also operable to calculate, for each two-dimensional representation, an average of the parameter values of the points in the region of interest.

17. Ultrasonic imaging apparatus as claimed in claim 10, further comprising:

minimum standard deviation plane determining means (39) for determining, from the respective statistical measures of standard deviation for the representations of the said plurality, which one of those representations has the minimum standard deviation of the parameter values of the points in the region of interest; and

minimum standard deviation plane indicating means (39, 34, 36) for displaying information identifying the representation determined by the minimum standard deviation plane determining means (39) to have the minimum standard deviation.

18. Ultrasonic imaging apparatus as claimed in claim 17, further comprising two-dimensional distribution indicating means (36, 42) for displaying the representation determined by the said minimum standard deviation plane determining means (39) to have the minimum standard deviation.

19. Ultrasonic imaging apparatus as claimed in claim 17 or 18, when read as appended to claim 15, wherein a histogram indicating the said frequency distribution corresponding to the most-recently-produced representation is displayed superimposed on another histogram indicating the said frequency distribution corresponding to the representation determined by the minimum standard deviation plane determining means (39) to have the minimum standard deviation.

## EP 0 459 813 B1

**Patentansprüche**

1. Ultraschall-Bilderzeugungsgerät, mit:

   einer Ultraschallimpuls-Generatoreinrichtung (1-5) zum Emittieren einer vorbestimmten Sequenz von Ultraschallimpulsen in ein zu überprüfendes Medium, wobei die Impulse der Sequenz entlang jeweiliger unterschiedlich gerichteter Emissionspfade in einer vorbestimmten Ebene sc emittiert werden, daß während des Verlaufes der Sequenz ein Arbeitsbereich einer vorbestimmten Ebene innerhalb des Mediums gescant wird;
   einer Ultraschall-Detektoreinrichtung (1, 3, 6-9), die dafür ausgebildet ist, um Reflexionen von jedem solchen emittierten Impuls zurück entlang dem Emissionspfad desselben zu detektieren;
   eine eine zweidimensionale Verteilung ableitende Einrichtung (100, 41), die zum Messen des Zeitintervalls zwischen der Emission jedes solchen Impulses und der Detektion durch die Ultraschall-Detektoreinrichtung von jeder solcher Reflexion dieses Impulses geschaltet ist, um die Abstände von Punkten in dem genannten Arbeitsbereich, an denen die Reflexionen auftreten, zu der Detektoreinrichtung zu bestimmen, und die betreibbar ist, um die vorbestimmten Abstände zur Erzeugung einer zweidimensionalen Wiedergabe der Verteilung über den Arbeitsbereich hinweg zu verwenden, und zwar von jeweiligen Werten eines vorbestimmten Eigenschaftsparameters des Mediums an den genannten Stellen;
   eine Einrichtung (37) zum Bezeichnen einer Interessenzone, die selektiv steuerbar ist, um eine eingeschränkte Interessenzone in dem Arbeitsbereich festzulegen; und
   eine Einrichtung (32, 33) zum Ableiten von statistischen Informationen, die betreibbar ist, um basierend auf den Parameterwerten von all solchen Punkten in der genannten Interessenzone, statistische Informationen bezüglich der Dispersion von solchen Werten in dieser Zone zu erhalten;
   wobei das Gerät betreibbar ist, um wiederholt den Arbeitsbereich eine Vielzahl von Malen in einer Aufeinanderfolge zu scannen, um eine Aufeinanderfolge von solchen Wiedergaben zu erzeugen und um für jede Wiedergabe eine entsprechende solche statistische Information bezüglich des Parameterwertes der Dispersion in der Interessenzone abzuleiten;

   **gekennzeichnet** durch eine Speichereinrichtung (31) für die zweidimensionale Verteilung, um eine Vielzahl von aufeinanderfolgend erzeugten Wiedergaben zu speichern, und durch eine statistische Informations-Speichereinrichtung (34, 35) zum Speichern der entsprechenden statistischen Information für jede Wiedergabe der genannten Vielzahl.

2. Ultraschall-Bilderzeugungsgerät nach Anspruch 1, ferner mit einer Anzeigeeinrichtung (36, 38) für die gespeicherte Verteilung, um eine der genannten zweidimensionalen Wiedergaben, die in der Speichereinrichtung (31) für die zweidimensionale Verteilung gespeichert sind, darzustellen.

3. Ultraschall-Bilderzeugungsgerät nach Anspruch 1 oder 2, bei dem die zweidimensionalen Wiedergaben, die in der Speichereinrichtung (31) zum Speichern der zweidimensionalen Verteilung gespeichert sind, die Wiedergaben sind, die kürzlich durch die Einrichtung (100, 41) zum Ableiten der zweidimensionalen Verteilung erzeugt wurden.

4. Ultraschall-Bilderzeugungsgerät nach Anspruch 1, 2 oder 3, ferner mit einer Anzeigeeinrichtung (36, 42) für die gespeicherten statistischen Informationen, um die in der Speichereinrichtung (34, 35) für die Speicherung von statistischen Informationen abgespeicherten statistischen Informationen darzustellen.

5. Ultraschall-Bilderzeugungsgerät nach irgendeinem der vorhergehenden Ansprüche, ferner mit einer Speicher-Einfriereinrichtung (40) zum Einfrieren einer Operation des Auffrischens der Speichereinrichtung (34, 35) für die statistischen Informationen und der Speichereinrichtung (31) für die zweidimensionale Verteilung.

6. Ultraschall-Bilderzeugungsgerät nach Anspruch 5, ferner mit einer die eingefrorene Ebene bezeichnenden Einrichtung (38), die betreibbar ist, nachdem die Speichereinrichtung (34, 35) für die statistischen Informationen und die Speichereinrichtung (31) für die zweidimensionale Verteilung eingefroren worden sind, eine der Wiedergaben zu bezeichnen, die in der Speichereinrichtung (31) für die zweidimensionale Verteilung gespeichert sind.

7. Ultraschall-Bilderzeugungsgerät nach Anspruch 6, ferner mit einer die bezeichnete Information anzeigenden Einrichtung (34, 35, 36) zum Anzeigen oder Darstellen der zweidimensionalen Wiedergabe, die durch die Einfrierebene-Bezeichnungseinrichtung (38) bezeichnet wurde, und um die statistischen Informationen, die dieser bezeichneten Wiedergabe entsprechen, darzustellen.

**8.** Ultraschall-Bilderzeugungsgerät nach irgendeinem der vorhergehenden Ansprüche, ferner mit:

einer Ebene-Bezeichnungseinrichtung (38) zum Bezeichnen von einer der Wiedergaben, die in der Speichereinrichtung (31) für die zweidimensionale Verteilung gespeichert sind; und eine eine Historie-Information anzeigende Einrichtung (34, 35, 36) zur Darstellung einer kürzlichen Historie der statistischen Informationen, beginnend mit den statistischen Informationen für die gerade kürzlich erzeugte Wiedergabe und endend mit den statistischen Informationen für die Wiedergabe, die durch die Ebene-Bezeichnungseinrichtung (38) bezeichnet wurde.

**9.** Ultraschall-Bilderzeugungsgerät nach irgendeinem der vorhergehenden Ansprüche, ferner mit:

einer die Interessenzone wieder bezeichnenden Einrichtung (37), die selektiv steuerbar ist, um eine weitere Interessenzone in dem Arbeitsbereich zu definieren, die verschieden ist von der ausgewählten Interessenzone, die durch die Interessenzone-Bezeichnungseinrichtung definiert wurde; und eine die statistischen Informationen wieder ableitende Einrichtung (32) zum Ableiten der statistischen Informationen, die sich auf die Dispersion der Parameterwerte in der weiteren Interessenzone beziehen.

**10.** Ultraschall-Bilderzeugungsgerät nach irgendeinem der vorhergehenden Ansprüche, bei dem die statistischen Informationen ein statistisches Maß der Standardabweichung der Parameterwerte der Punkte in der Interessenzone enthalten.

**11.** Ultraschall-Bilderzeugungsgerät nach irgendeinem der vorhergehenden Ansprüche, bei dem die statistischen Informationen eine statistische Meßgröße der Schiefe einer Frequenzverteilung der Parameterwerte der Punkte in der Interessenzone enthalten.

**12.** Ultraschall-Bilderzeugungsgerät nach irgendeinem der vorhergehenden Ansprüche, bei dem die statistischen Informationen eine statistische Meßgröße der Wölbung einer Frequenzverteilung der Parameterwerte der Punkte in der Interessenzone enthalten.

**13.** Ultraschall-Bilderzeugungsgerät nach irgendeinem der Ansprüche 10 bis 12, bei dem die statistischen Meßgrößen, die jeweils unterschiedlichen Wiedergaben der genannten Vielzahl entsprechen, gleichzeitig dargestellt werden.

**14.** Ultraschall-Bilderzeugungsgerät nach irgendeinem der vorhergehenden Ansprüche, bei dem die Einrichtung (32, 33) zum Ableiten der statistischen Informationen ferner eine Einrichtung (33) zum Ableiten der Frequenzverteilung enthält, die betreibbar ist, um die Parameterwerte der Punkte in der ausgewählten Interessenzone zuverarbeiten, um eine Frequenzverteilung von solchen Werten in der Interessenzone der in Betracht stehenden Wiedergabe zu erhalten.

**15.** Ultraschall-Bilderzeugungsgerät nach Anspruch 14, bei dem Frequenzverteilungen, die jeweils zwei oder mehreren Wiedergaben entsprechen, gleichzeitig dargestellt werden.

**16.** Ultraschall-Bilderzeugungsgerät nach irgendeinem der vorhergehenden Ansprüche, bei dem die Einrichtung (32, 33) zum Ableiten der statistischen Informationen auch dafür ausgebildet ist, um für jede zweidimensionale Wiedergabe einen Mittelwert der Parameterwerte der Punkte in der Interessenzone zu berechnen.

**17.** Ultraschall-Bilderzeugungsgerät nach Anspruch 10, ferner mit

einer Bestimmungseinrichtung (39) für die Minimal-Standardabweichungsebene, um aus den jeweiligen statistischen Meßwerten eine Standardabweichung für die Wiedergaben der genannten Vielzahl zu bestimmen, welche von diesen Wiedergaben die minimale Standardabweichung der Parameterwerte der Punkte in der Interessenzone aufweist; und eine Anzeigeeinrichtung (39, 34, 36) für die Minimum-Standardabweichungsebene, um Informationen darzustellen, welche die Wiedergabe identifizieren, die durch die Bestimmungseinrichtung (39) für die Minimum-Standardabweichungsebene bestimmt wurde, die minimale Standardabweichung zu besitzen.

**18.** Ultraschall-Bilderzeugungsgerät nach Anspruch 17, ferner mit einer Anzeigeeinrichtung (36, 42) für die zweidimensionale Verteilung, um die Wiedergabe darzustellen, die durch die Bestimmungseinrichtung (39) für die minimale Standardabweichungsebene bestimmt wurde, die minimale Standardabweichung zu besitzen.

**19.** Ultraschall-Bilderzeugungsgerät nach Anspruch 17 oder 18, in Rückbeziehung auf Anspruch 15, bei dem ein Histogramm, welches die Frequenzverteilung entsprechend der gerade kürzlich erzeugten Wiedergabe anzeigt, dadurch wiedergegeben wird, indem ein anderes Historgramm, welches die Frequenzverteilung entsprechend der Wiedergabe anzeigt, die durch die Bestimmungseinrichtung (39) für die Minimal-Standardabweichungsebene bestimmt wurde, die minimale Standardabweichung zu besitzen, überlagert wird.

**Revendications**

**1.** Appareil d'imagerie ultrasonore comprenant :

des moyens de génération d'impulsions ultrasonores (1-5) pour émettre une séquence prédéterminée d'impulsions ultrasonores dans un milieu à examiner, les impulsions de la séquence étant émises selon des chemins d'émission dirigés différemment dans un plan prédéterminé, de façon qu'au cours de la séquence précitée, une zone de travail du plan prédéterminé soit balayée dans le milieu;
des moyens de détection ultrasonores (1, 3, 6-9) conçus pour détecter des réflexions en arrière de chaque impulsion émise, le long de son chemin d'émission;
des moyens d'obtention de distribution bidimensionnelle (100, 41), connectés pour mesurer l'intervalle de temps entre l'émission de chaque impulsion et la détection par les moyens de détection ultrasonores de chaque réflexion de cette impulsion, de façon à déterminer les distances à partir des moyens de détection, de points dans la zone de travail auxquels de telles réflexions se produisent, et capables d'employer les distances déterminées pour produire une représentation bidimensionnelle de la distribution, dans toute l'étendue de la zone de travail, des valeurs respectives d'un paramètre caractéristique prédéterminé du milieu à ces points;
des moyens de désignation de région étudiée (37), pouvant être commandés sélectivement pour définir une région restreinte étudiée dans la zone de travail; et
des moyens d'obtention d'information statistique (32, 33) capables d'obtenir, sur la base des valeurs de paramètres de tous les points précités dans la région étudiée, une information statistique concernant la dispersion de ces valeurs dans cette région;
l'appareil pouvant fonctionner de façon répétée afin de balayer la zone de travail un certain nombre de fois en succession, de manière à produire une succession de telles représentations, et à obtenir, pour chaque représentation une telle information statistique correspondante, concernant la dispersion des valeurs de paramètre dans la région étudiée;

caractérisé par des moyens d'enregistrement de distributions bidimensionnelles (31) pour enregistrer un ensemble des représentations qui sont produites successivement, et par des moyens d'enregistrement d'information statistique (34, 35) pour enregistrer l'information statistique correspondante précitée, pour chaque représentation de l'ensemble de celles-ci.

**2.** Appareil d'imagerie ultrasonore selon la revendication 1, comprenant en outre des moyens d'indication de distribution enregistrée (36, 38) pour visualiser l'une des représentations bidimensionnelles qui sont enregistrées dans les moyens d'enregistrement de distributions bidimensionnelles (31).

**3.** Appareil d'imagerie ultrasonore selon la revendication 1 ou 2, dans lequel les représentations bidimensionnelles qui sont enregistrées par les moyens d'enregistrement de distributions bidimensionnelles (31) sont les représentations qui sont produites le plus récemment par les moyens d'obtention de distribution bidimensionnelle (100, 41).

**4.** Appareil d'imagerie ultrasonore selon la revendication 1, 2 ou 3, comprenant en outre des moyens d'indication d'information statistique enregistrée (36, 42) pour visualiser l'information statistique qui est enregistrée dans les moyens d'enregistrement d'information statistique (34, 35).

**5.** Appareil d'imagerie ultrasonore selon l'une quelconque des revendications précédentes, comprenant en outre des moyens de figeage d'enregistrement (40) pour figer une opération d'actualisation des moyens d'enregistrement d'information statistique (34, 35) et des moyens d'enregistrement de distributions bidimensionnelles (31).

**6.** Appareil d'imagerie ultrasonore selon la revendication 5, comprenant en outre des moyens de désignation de plan figé (38) que l'on peut faire fonctionner, après que les moyens d'enregistrement d'information statique (34, 35) et les moyens d'enregistrement de distributions bidimensionnelles (31) ont été figés, pour désigner l'une des représentations qui sont enregistrées dans les moyens d'enregistrement de distributions bidimensionnelles (31).

**7.** Appareil d'imagerie ultrasonore selon la revendication 6, comprenant en outre des moyens d'indication d'information désignée (34, 35, 36) pour visualiser la représentation bidimensionnelle qui est désignée par les moyens de désignation de plan figé (38), et pour visualiser l'information statistique correspondant à cette représentation désignée.

**8.** Appareil d'imagerie ultrasonore selon n'importe quelle revendication précédente, comprenant en outre :

des moyens de désignation de plan (38) pour désigner l'une des représentations qui sont enregistrées dans les moyens d'enregistrement de distributions bidimensionnelles (31); et
des moyens d'indication d'information d'historique (34, 35, 36) pour visualiser un historique récent de l'information statistique, en partant de l'information statistique concernant la représentation qui a été produite le plus récemment, et en terminant par l'information statistique pour la représentation qui est désignée par les moyens de désignation de plan (38).

**9.** Appareil d'imagerie ultrasonore selon n'importe quelle revendication précédente, comprenant en outre :

des moyens de nouvelle désignation de région étudiée (37), pouvant être commandés sélectivement pour définir une région étudiée supplémentaire. dans la zone de travail. différente de la région étudiée sélectionnée qui est définie par les moyens de désignation de région étudiée; et
des moyens de nouvelle obtention d'information statistique (32) pour obtenir une information statistique concernant la dispersion des valeurs de paramètre de la région étudiée supplémentaire.

**10.** Appareil d'imagerie ultrasonore selon n'importe quelle revendication précédente, dans lequel l'information statistique comprend une mesure statistique de l'écart-type des valeurs de paramètre des points dans la région étudiée.

**11.** Appareil d'imagerie ultrasonore selon n'importe quelle revendication précédente, dans lequel l'information statistique comprend une mesure statistique du biais d'une distribution de fréquence des valeurs de paramètre des points dans la région étudiée.

**12.** Appareil d'imagerie ultrasonore selon n'importe quelle revendication précédente, dans lequel l'information statistique comprend une mesure statistique de la curtosis d'une distribution de fréquence des valeurs de paramètre des points dans la région étudiée.

**13.** Appareil d'imagerie ultrasonore selon l'une quelconque des revendications 10 à 12, dans lequel les mesures statistiques correspondant respectivement aux différentes représentations de l'ensemble de celles-ci, sont visualisées simultanément.

**14.** Appareil d'imagerie ultrasonore selon n'importe quelle revendication précédente, dans lequel les moyens d'obtention d'information statistique (32, 33) comprennent en outre des moyens d'obtention de distribution de fréquence (33) capables de traiter les valeurs de paramètre des points dans la région étudiée sélectionnée, pour obtenir une distribution de fréquence de ces valeurs dans la région étudiée de la représentation concernée.

**15.** Appareil d'imagerie ultrasonore selon la revendication 14, dans lequel les distributions de fréquence correspondant respectivement à deux représentations, ou plus, sont visualisées simultanément.

**16.** Appareil d'imagerie ultrasonore selon n'importe quelle revendication précédente, dans lequel les moyens d'obtention d'information statistique (32, 33) sont également capables de calculer, pour chaque représentation bidimensionnelle, une moyenne des valeurs de paramètre des points dans la région étudiée.

**17.** Appareil d'imagerie ultrasonore selon la revendication 10, comprenant en outre :

des moyens de détermination de plan d'écart-type minimal (39) pour déterminer, à partir des mesures statistiques respectives d'écart-type pour les représentations de l'ensemble de celles-ci, laquelle de ces représentations a l'écart-type minimal des valeurs de paramètre des points dans la région étudiée; et
des moyens d'indication de plan d'écart-type minimal (39, 34, 36) pour visualiser une information identifiant la représentation qui est déterminée par les moyens de détermination de plan d'écart-type minimal (39) comme étant celle qui a l'écart-type minimal.

**18.** Appareil d'imagerie ultrasonore selon la revendication 17, comprenant en outre des moyens d'indication de distribution bidimensionnelle (36, 42) pour visualiser la représentation qui est déterminée par les moyens de détermination de plan d'écart-type minimal (39) comme étant celle qui a l'écart-type minimal.

**19.** Appareil d'imagerie ultrasonore selon la revendication 17 ou 18, lorsqu'elle est considérée comme rattachée à la revendication 15, dans lequel un histogramme indiquant la distribution de fréquence qui correspond à la représentation produite le plus récemment, est visualisé en superposition sur un autre histogramme indiquant la distribution de fréquence qui correspond à la représentation qui est déterminée par les moyens de détermination de plan d'écart-type minimal (39) comme étant celle qui a l'écart-type minimal.

Fig. 1

EP 0 459 813 B1

# Fig. 2

OUTPUT OF
LOG AMP

**54**
GRADIENT
CALCULATION
CIRCUIT

**55**
CENTER
FREQUENCY
DETECTOR

**56**

$-\dfrac{1}{2c}$

**57**

TO CIRCUIT
OF FIG. 3

EP 0 459 813 B1

Fig. 3

EP 0 459 813 B1

Fig. 4

# Fig. 5

# Fig. 6

# *Fig. 7*

AVERAGE
IN ROI

FRAME

PAST

CURRENT
FRAME

# *Fig. 8*

STANDARD
DEVIATION
IN ROI

FRAME

PAST

CURRENT
FRAME

# FIg. 9

SKEWNESS IN ROI

FRAME

PAST

CURRENT FRAME

# FIg. 10

KURTOSIS IN ROI

FRAME

PAST

CURRENT FRAME

# F I g. 11

FREQUENCY

CURRENT FRAME

J FRAMES BEFORE

2J FRAMES BEFORE

3J FRAMES BEFORE

1 2 3 4 5 6 7        ··················     k

VALUE OF TISSUE
CHARACTERIZATION
PARAMETER

# F I g. 12

CURSOR

AVERAGE
IN ROI

STANDARD
DEVIATION
IN ROI

SKEWNESS
IN ROI

KURTOSIS
IN ROI

FRAME

PAST

CURRENT
FRAME

DESIGNATED
FRAME

# F i g. 13

AVERAGE
IN ROI

STANDARD
DEVIATION
IN ROI

MARKER

PAST

CURRENT FRAME

DETERMINED
FRAME AS MINIMUM
STANDARD DEVIATION

# F i g. 14

FREQUENCY

HISTGRAM OF FRAME
DETERMINED AS FIG. 13

HISTGRAM OF
CURRENT FRAME

1 2 3 4 5 6 7 ........... k

VALUE OF TISSUE
CHARACTERIZATION
PARAMETER